# EUROPEAN PATENT SPECIFICATION

(11) **EP 1 434 477 B1**
(45) Date of publication and mention of the grant of the patent: **06.12.2006**
(21) Application number: 01982392.1
(22) Date of filing: 03.10.2001
(51) Int. Cl.: A01D 46/26

(54) **HIGH-YIELD OLIVE PICKING BEATING TOOL**
GERÄT ZUM ERNTEN VON OLIVEN
OUTIL DE BATTAGE POUR LA CUEILLETTE D'OLIVES A HAUT RENDEMENT

(43) Date of publication of application: 07.07.2004
(73) Proprietor: Rolla, Alberto, 16100 Genova (IT)
(72) Inventor: Rolla, Alberto, 16100 Genova (IT)
(74) Representative: Celestino, Marco
(86) International application number: PCT/EP2001/011426
(87) International publication number: WO 2003/030625

(56) References cited:
- EP-A1- 1 116 432
- DE-B- 1 257 476
- US-A- 3 389 543
- US-A- 4 611 461
- DATABASE WPI Section PQ, Week 198635 Derwent Publications Ltd., London, GB; Class P12, AN 1986-230936 XP002193026 & SU 1 205 811 A (UKR HORTICULTURE IN), 23 January 1986 (1986-01-23)

## Description

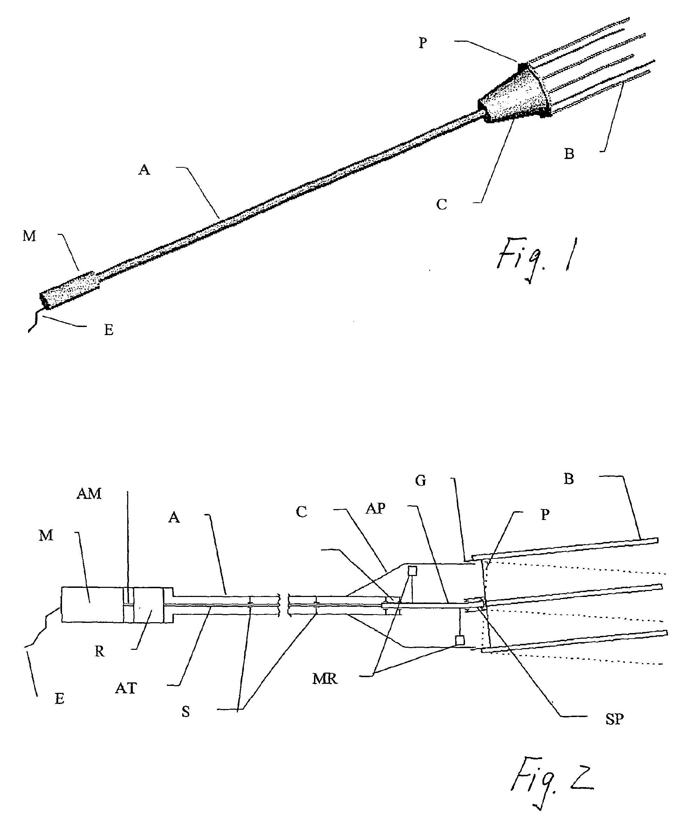

The invention addresses an olive picking beating tool constructed in accordance with the brief description of Fig. 1: it is composed of a motor unit M, a power cord E, a rod A which forms the tool handle, a case C for enclosing the drive shaft, a rocking plate P for supporting a certain number of end bars B; during operation, the oscillating movement of the bar ends, in contact with the plant vegetation, will cause the olives to come off and fall, due either to direct hits, or to the beating action transmitted to the thin branches whereto they are attached.

The main specifications of the tool according to a basic design are as follows:
Total length: 2.5 meters.
Bar length: 40 centimeters.
Number of bars: 6, arranged around a 20 cm diameter circumference.
Average power consumption: 50 Watt.
Weight: slightly above 2 kg.

Separate battery unit having a weight of about 15 kg (lasting about 10 hours).

Obviously, these specifications are only provided by way of indication and may be greatly varied.

Equivalent tools currently on sale operate according to a totally different mechanical principle, a compressed air-powered pneumatic cylinder puts in reciprocation motion one or two "rakes" formed by a certain number of "fingers", having a length of about fifteen centimeters.

This solution involves a number of serious drawbacks:
- Compressed air operation requires the use of an at least 2.5 horsepower continuously operated compressor for each tool, which is used in the open country, and therefore must be driven by an explosion engine, thereby causing a number of discomforts (high purchase costs, difficulties for compressor transportation, refueling needs, and daily costs thereof, maintenance costs and times, operators working all day in noisy conditions, and smelling exhaust gases, possible starting failures).
- Rake tips hit the plant at a rather high speed and thereby cause, in addition to possible consequences for the plant, considerable vibrations to be transmitted to the hands and arms of the operator which, when added to a tool weight of at least 4 kg, cause fatigue and require the tool to be used by strong and trained personnel.
- The pneumatic cylinder is fitted at the top of the tool, whereby all the weight of the tool is concentrated on the end opposite to the handle, said handle being further required due to the presence of the compressed air control lever, which is to be held down continuously during operation. Considering the length of the tool, this weight distribution causes further fatigue.
- Rakes must operate with an appropriate inclination with respect to the plant; therefore the tools must have an articulation at their top which is to be adjusted from time to time, in a time consuming operation, and is additionally exposed to failure, loosening and rupture.
- The size, conformation and movement of the rakes do not allow to operate deeply into the plant but only at the surface thereof, wherefore this type of tool can be only effectively used on plants which have been specially pruned in view of such a use,

Another beating tool is known from EP1116432A1, comprising a straight Shaft integral to a bracket and from which beating bars integrally extend. The shaft is capable to be put in a cyclic rocking motion by a drive consisting of a rotating shaft having a slanted end portion, which can freely rotate in a support. The support is connected to the bracket by a couple of connecting rods. This solution is complex and not satisfactorily light-weight and cost effective.

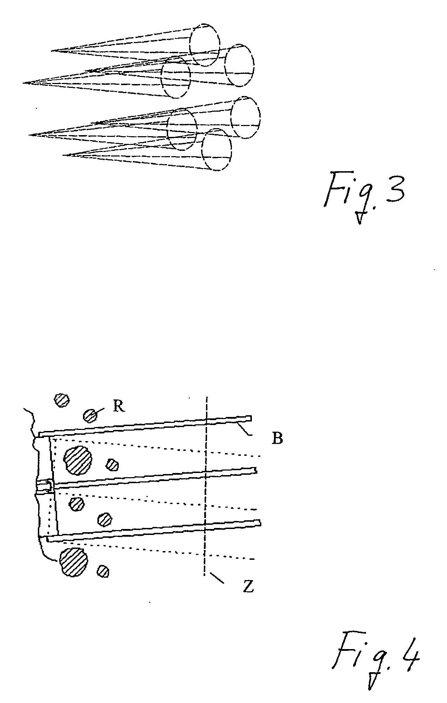

The basic construction details of the preset invention, which perfectly solves the above problems, are schematized in Fig. 2.

A small motor M, driven by the power cord E, sets into rotation, through its drive shaft AM and possibly a reduction gear R, the gear shaft, supported inside the rod A by an adequate number of small supports S, preferably made of an antifriction plastic material.

The main shaft AP, supported by its support SA at the upper end of the rod A, receives motion from the gear shaft AT whereto it is directly connected and ends by its slightly slanted end into the support SP which is integral with the rocking plate P.

The supports SA and SP may be each made of a sickle pair of ball bearings, appropriately spaced in such a manner as to be able to withstand mechanical stresses in any direction.

Finally, the bars B are integral with the rocking plate P.

During operation, the rocking plate P, which cannot be driven into rotation by the main shaft AP because it is free from the support SP, will be nevertheless forced to a rocking swinging motion, symmetrical all through the 360° rotation of the shaft AP, thanks to the inclination of the end portion thereof.

Once half a turn is run by the shaft AP, the bars B and the plate P will be in a position opposite to the one shown in Fig. 2, as outlined by dotted lines; without rotating, the bars B will run through a conical path, as shown in the perspective view of Fig. 3.

The inertia of the masses which participate in the rocking motion, even when minimized, would generate, as a reaction, a rather strong vibration all over the tool, therefore, the main shaft AP is fitted with two rotating masses MR which, if suitably dimensioned and positioned, for instance as shown, allow to accurately balance, both statically and dynamically, the rocking system, thereby totally removing such vibrations.

The bars B will have to be made of an appropriate light-weight, rigid and strong material, e.g. carbon fiber, to minimize inertia and bending characteristics, to keep unaltered effectiveness, and withstand mechanical stresses, mainly caused by bending, whereto they are exposed during operation.

Finally, the case C, which is integral with the rod A has the function to cover the main shaft AP and may be provided with a small gasket G, e.g. made of rubber sponge which, besides preventing possible foreing bodies from infiltrating between the case and the rear edge of the plate P, may also prevent the latter, by exerting a slight friction thereon, from spontaneously rotating inside the support DP, due to the friction, however slight, between the inclined rotating end portion of the shaft AP and the plate P. (To this purpose, more drastic arrangements may be also provided, such as simply using one or more teeth on the case C, and a corresponding number of matching grooves on the edge of the rocking plate P, thereby allowing the latter to rock as desired without rotating.)

The main feature of the drive system which characterizes the invention lies in its high mechanical effectiveness: assume that the end of a bar B loads a spring in its path. Along the portion in which the spring is compressed, it will absorb mechanical power from the main shaft AP but, in the next step, when the spring extends again, the exact contrary will occur, i.e. the spring will return the accumulated power to the main shaft AP, thereby facilitating its rotation. In actual operation, the considerable elasticity of the small branches contacted by the bars causes them to essentially behave as an ideal spring, wherefore even upon a sufficiently strong beating action, the power which is actually absorbed by the plant and hence consumed, is limited; the great simplicity of the mechanical solution taken herein implies that, even in idling operation, due to the fact that only small frictions due to branch rotation have to be overcome, power consumption is actually negligible (about 10 watt as a whole).

Opposite to the defects of the systems currently on sale, the invention has considerable advantages, which may be summarized as follows:
- Possibility of using a special portable battery (very low cost) which, if charged at night, allows the tool to be used all through the following work day.
- Possibility of direct connection to the battery of a car or a tractor.
- Negligible power consumption: the cost of a complete battery recharge for a whole work day is currently estimated at about 100 Liras.
- Negligible poise and no pollution.
- The contact of the tool against the plant is not violent and the vibrations transmitted to the operator as a reaction are very limited, which - further considered together with the slight weight of the tool
- makes the invention suitable for being used by anyone; even the position of the motor unit, when mounted as preferred (but without limitation) at the lower end of the rod to at least partly counterbalance the weight of the parts situated at the opposite end, contributes to a lower fatigue.
- Thanks to its very limited absorption in idling operation, and to its not being dangerous, the tool may be always left in operation, by using a toggle switch, and be held in any intermediate point of the rod in the most comfortable and non-fatiguing position.
- The bars B may contact the plant at any angle, while keeping the same efficiency, hence the tool doesn't require any articulation or adjustment.
- The length of the bars B and the path thereof, allow, as shown in Fig, 4, to drive the tool deep into the plant and, after passing any branches R which, as is evident, do not interfere with the movement, to reach a position z in which it is completely covered thereby; this characteristic further differentiates the invention from prior art solutions and makes it Universally suitable for use on any type of plant or pruning.

A small electronic power supply may be possibly further provided, preferably between the battery and the power cord, which may provide the following benefits:
- Possibility of a universal supply 12/24 Volt.
- Possibility of increasing voltage (for instance to the non dangerous 48 Volt rating) which, while considerably decreasing losses at the power cord, allows the use of longer and/or thinner cords.
- Possibility of stabilizing the number of turns of the motor in optimal running conditions.
- Possibility of limiting the highest torque delivered by the motor to limit any accidental overload.

A further improvement may be made by providing, preferably at the lower end of the housing of the motor M, a special mount which allows the tool to be possibly fitted onto a special extension, if used On particularly high plants.

The motor unit has been only placed in the described position to improve weight distribution, hence, by giving up this benefit, there is no limitation as to mount it at the upper end of the rod A, in direct connection with the main shaft AP, therefore removing the gear shaft AT and the associated supports S.

The main shaft AP also allows to provide different construction arrangements, wherein, for instance, the rotating masses are a part thereof.

Particularly, even the number, arrangement, symmetry and length of the bars B may be widely varied: bars might be, for instance, aligned side by side or provided in arrangements more or less similar to those illustrated, symmetrical or not, including one or more of them at the center; their length might not be uniform.

## Claims

1. A beating tool, typically but without limitation for olive-picking, comprising a plate (P), from which beating bars (B) integrally extend and which is capable to be put in a cyclic rocking motion, and comprising a drive consisting of a rotating shaft (AP), said rotating shaft (AP) having a slanted end portion, **characterized in that** said slanted end portion is inserted in a support (SP) integral to said plate (P) and is suitable to freely rotate with respect to said plate (P), said rotating shaft (AP) with slanted end portion forcing said plate (P) and said bars (B), through the support (SP), into said cyclic rocking motion.

2. A beating tool as claimed in claim 1, wherein the rotating shaft (AP) is **characterized in that** it has two rotating masses (MP), integral therewith or parts thereof, which allow the drive to be balanced both statically and dynamically.

3. A beating tool as claimed in one or more of the preceding claims, **characterized by** a certain number of bars, integral with the rocking plate (P), made (preferably as small tubes of a composite material) of a suitable light-weight and strong material, and having a length and arrangement selected as the most effective for the intended use, such as, as a mere example of a general use, 6 bars having a length of 40 centimeters arranged symmetrically over a 20 centimeter diameter circumference, as shown.

4. A beating tool as claimed in one or more of the preceding claims, **characterized by** a case (c) which, besides enclosing the mechanical drive, prevents, thanks to one or more special teeth or preferably simply by the friction caused by a gasket (G), any spontaneous rotation of the rocking plate (P) due to unavoidable slight frictions occurring inside the support (SP).

5. A beating tool as claimed in one or more of the preceding claims, **characterized in that** it is driven by a simple and light-weight motor drive (motor M + possibly a gear reduction R), preferably disposed at the lower end of the tool and connected to the drive system by means of a gear shaft (AT) housed inside the rod (A) in which it is borne by supports (S) to allow a better weight distribution.

6. A beating tool as claimed in the preceding claim, wherein the power supply is provided by a battery, preferably through a small electronic adapter which provides one or more, or all of the following features:
- Universal supply at 12/24 Volt.
- Voltage increase to reduce losses at the power cord, and allow the use of longer and/or thinner cords,
- Stabilization of the number of turns of the motor in optimal running conditions.
- Limitation of the highest torque delivered by the motor to prevent any accidental overload.

7. A beating tool as claimed in one or more of the preceding claims, **characterized in that** it has, preferably at the rear of the motor unit (M), a special mount which allows the tool to be possibly fitted onto an extension, in order to reach the top of particularly high plants.

## Patentansprüche

1. Schlagwerkzeug, typischerweise aber nicht ausschließlich zum Olivenernten, mit einer Platte (P), von der sich Schlagstöcke (B) integral erstrecken und die in eine zyklische Kippbewegung versetzt werden kann, und einem Antrieb, der aus einer Drehwelle (AP) besteht, wobei die Drehwelle (AP) einen abgeschrägten Endabschnitt aufweist,
**dadurch gekennzeichnet, dass** der abgeschrägte Endabschnitt in eine mit der Platte (P) integrale Halterung (SP) eingesetzt ist und sich in Bezug auf die Platte (P) frei drehen kann, wobei die Drehwelle (AP) mit dem abgeschrägten Endabschnitt die Platte (P) und die Stöcke (B) über die Halterung (SP) zu der zyklischen Kippbewegung zwingt.

2. Schlagwerkzeug nach Anspruch 1, wobei die Drehwelle (AP) **dadurch gekennzeichnet ist, dass** sie zwei sich drehende Massen (MP) aufweist, die integral mit dieser oder Teilen hiervon sind, und die einen sowohl statischen als auch dynamischen Ausgleich des Antriebs ermöglichen.

3. Schlagwerkzeug nach einem oder mehreren der vorangehenden Ansprüche, **gekennzeichnet durch** eine bestimmte Anzahl von mit der Rüttelplatte (P) integralen Stöcken, die (vorzugsweise als kleine Rohre eines Verbundmaterials) aus einem geeigneten leichtgewichtigen und festen Material hergestellt sind und eine Länge und Anordnung aufweisen, die als die wirksamsten für die vorgesehene Anwendung ausgewählt sind, wie beispielhaft für eine allgemeine Anwendung sechs Stöcke mit einer Länge von 40 Zentimetern, die symmetrisch über einen Umfang von 20 Zentimetern Durchmesser angeordnet sind, wie gezeigt ist.

4. Schlagwerkzeug nach einem oder mehreren der vorangehenden Ansprüche, **gekennzeichnet durch** ein Gehäuse (C), das außer der Umschließung des mechanischen Antriebs dank einem oder mehreren speziellen Zähnen oder vorzugsweise einfach **durch** die von einer Dichtung (G) bewirkte Reibung eine spontane Drehung der Rüttelplatte (P) vermeidet, und zwar infolge unvermeidbarer geringfügiger Reibungen, die innerhalb der Halterung (SP) auftreten.

5. Schlagwerkzeug nach einem oder mehreren der vorangehenden Ansprüche, **dadurch gekennzeichnet, dass** es von einem einfachen und leichtgewichtigen Motorantrieb (Motor (M) + eventuell einem Untersetzungsgetriebe R) angetrieben wird, der vorzugsweise am unteren Ende des Werkzeugs angeordnet und mit dem Antriebssystem mittels einer Getriebewelle (AT) verbunden ist, die in die Stange (A) aufgenommen ist, in der sie durch Lager (S) getragen wird, um eine bessere Gewichtsverteilung zu ermöglichen.

6. Schlagwerkzeug nach dem vorangehenden Anspruch, wobei die Energieversorgung von einer Batterie bereitgestellt wird, vorzugsweise über einen kleinen elektronischen Adapter, der eines oder mehrere oder alle der folgenden Merkmale bietet:
- Universal-Stromversorgung mit 12/24V,
- Spannungszunahme, um Verluste am Stromkabel zu verringern und die Verwendung längerer und/oder dünnerer Kabel zu ermöglichen,
- Stabilisation der Anzahl von Umdrehungen des Motors bei optimalen Laufbedingungen,
- Begrenzung des höchsten gelieferten Drehmoments durch den Motor, um eine versehentliche Überlastung zu vermeiden.

7. Schlagwerkzeug nach einem oder mehreren der vorangehenden Ansprüche, **dadurch gekennzeichnet, dass** es, vorzugsweise an der Rückseite der Motoreinheit (M), eine spezielle Einrichtung aufweist, die es ermöglicht, das Werkzeug ggf. an einer Verlängerung anzubringen, um die Spitze besonders hoher Pflanzen zu erreichen.

## Revendications

1. Outil de battage, destiné typiquement, sans limitation, pour la cueillette des olives, comprenant une plaque (P), à partir de laquelle des barres de battage (B) s'étendent d'un seul tenant et qui peut être amenée à réaliser un mouvement de balancement cyclique et comprenant un entraînement constitué d'un arbre de rotation (AP), ledit arbre de rotation (AP) ayant une partie d'extrémité inclinée, **caractérisé en ce que** ladite partie d'extrémité inclinée est insérée dans un support (SP) d'un seul tenant avec ladite plaque (P) et est appropriée pour tourner librement par rapport à ladite plaque (P), ledit arbre de rotation (AP) avec ladite partie d'extrémité inclinée forçant ladite plaque (P) et lesdites barres (B), par l'intermédiaire du support (SP), à réaliser ledit mouvement de balancement cyclique.

2. Outil de battage selon la revendication 1, dans lequel ledit arbre de rotation (AP) est **caractérisé en ce qu'**il a deux masses rotatives (MP) d'un seul tenant avec celui-ci ou avec des parties de celui-ci, qui permettent l'équilibrage de l'entraînement à la fois de manière statique et dynamique.

3. Outil de battage selon l'une quelconque, ou plusieurs, des revendications précédentes, **caractérisé en ce qu'**un certain nombre de barres, d'un seul tenant avec la plaque d'oscillation (P), sont réalisées (de préférence comme des petits tubes à partir d'un matériau composite) à partir d'un matériau résistant et léger approprié, et ont une longueur et un agencement sélectionnés comme étant les plus efficaces pour l'utilisation prévue, comme, à titre de simple exemple d'une utilisation prévue, 6 barres ayant une longueur de 40 centimètres agencées de manière symétrique sur une circonférence ayant un diamètre de 20 centimètres, comme représenté.

4. Outil de battage selon l'une quelconque, ou plusieurs, des revendications précédentes, **caractérisé en ce qu'**un boîtier (C) qui, en plus de renfermer l'entraînement mécanique, empêche, grâce à une ou à plusieurs dent ou de préférence simplement par la friction provoquée par un joint (G), toute rotation spontanée de la plaque d'oscillation (P), due aux légères frictions inévitables ayant lieu à l'intérieur du support (SP).

5. Outil de battage selon l'une quelconque, ou plusieurs, des revendications précédentes, **caractérisé en ce qu'**il est entraîné par un entraînement à moteur (moteur M + éventuellement un réducteur de vitesse R) simple et léger, disposé de préférence au niveau de l'extrémité inférieure de l'outil et relié au système d'entraînement au moyen d'un arbre de transmission (AT) logé à l'intérieur de la tige (A) dans laquelle il est porté par des supports (S) pour permettre une meilleure répartition de poids.

6. Outil de battage selon la revendication précédente, dans lequel l'alimentation d'énergie est fournie par un accumulateur, de préférence par l'intermédiaire d'un petit adaptateur électronique qui remplit une ou plusieurs ou l'ensemble des caractéristiques suivantes :
- alimentation universelle à 12/24 Volts
- augmentation de la tension pour réduire des pertes au niveau du cordon d'alimentation et pour permettre d'utiliser des cordons plus longs et/ou plus fins.
- stabilisation du nombre de tours du moteur dans des conditions de fonctionnement optimales.
- limitation du couple supérieur délivré par le moteur afin d'empêcher toute surcharge accidentelle.

7. Outil de battage selon l'une quelconque, ou plusieurs, des revendications précédentes, **caractérisé en ce qu'**il a, de préférence à l'arrière du bloc moteur (M), une fixation particulière permettant l'éventuel ajustement de l'outil sur une extension afin d'atteindre le sommet de plantes particulièrement hautes.
